(19) Europäisches Patentamt
European Patent Office
Office européen des brevets

(11) **EP 0 927 476 B1**

(12) **EUROPÄISCHE PATENTSCHRIFT**

(45) Veröffentlichungstag und Bekanntmachung des Hinweises auf die Patenterteilung:
**07.01.2004   Patentblatt 2004/02**

(51) Int Cl.⁷: **H04L 12/56**, H04Q 11/04

(21) Anmeldenummer: **97918904.0**

(86) Internationale Anmeldenummer:
**PCT/DE1997/001847**

(22) Anmeldetag: **25.08.1997**

(87) Internationale Veröffentlichungsnummer:
**WO 1998/012842 (26.03.1998 Gazette 1998/12)**

(54) **VERFAHREN, DURCH WELCHES SÄTZEN VON VERSCHIEDENE PARAMETER REPRÄSENTIERENDEN WERTEN ADRESSEN ZUWEISBAR SIND**

ADDRESS ALLOCATION METHOD FOR RECORDS OF VALUES REPRESENTING VARIOUS PARAMETERS

PROCEDE SERVANT A AFFECTER DES ADRESSES A DES ENSEMBLES DE VALEURS REPRESENTANT DIFFERENTS PARAMETRES

(84) Benannte Vertragsstaaten:
**DE FR GB IT**

(30) Priorität: **18.09.1996   DE 19638174**

(43) Veröffentlichungstag der Anmeldung:
**07.07.1999   Patentblatt 1999/27**

(73) Patentinhaber: **Infineon Technologies AG**
**81669 München (DE)**

(72) Erfinder: **FOGLAR, Andreas**
**D-81245 München (DE)**

(74) Vertreter: **Reinhard - Skuhra - Weise & Partner**
**Postfach 44 01 51**
**80750 München (DE)**

(56) Entgegenhaltungen:
**US-A- 5 414 701          US-A- 5 481 687**
**US-A- 5 557 609**

• **OECHSLIN P ET AL: "ALI: A VERSATILE INTERFACE CHIP FOR ATM SYSTEMS" COMMUNICATION FOR GLOBAL USERS, ORLANDO, DEC. 6 - 9, 1992, Bd. 3 OF 3, 6.Dezember 1992, INSTITUTE OF ELECTRICAL AND ELECTRONICS ENGINEERS, Seiten 1282-1287, XP000390422**

**Beschreibung**

Die vorliegende Erfindung betrifft ein Verfahren gemäß dem Oberbegriff des Patentanspruchs 1.

Ein derartiges Verfahren ist unter anderem beim Vermittlungsverfahren ATM anwendbar, welches beispielsweise im sogenannten Breitband-ISDN bzw. B-ISDN eingesetzt wird.

Das CCITT (Consultative Committee for International Telephony and Telegraphy) hat das Vermittlungsverfahren ATM (Asynchronous Transfer Mode) bereits im Mai 1990 zum Standard für die sogenannte Datenpaket-Vermittlung von B-ISDN ausgerufen. ATM wurde hierbei wie folgt definiert: "Ein Vermittlungsverfahren, bei dem die Information in Zellen gebündelt ist; das Verfahren ist insofern asynchron, als die Zellen nicht notwendigerweise periodisch zwischen Sender und Empfänger ausgetauscht werden".

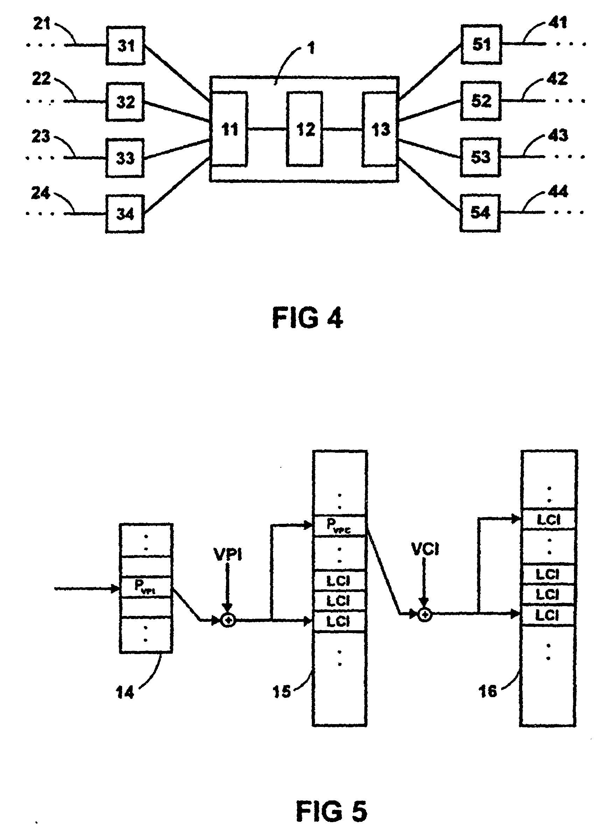

Eine mögliche Realisierungsform zur Durchführung des ATM-Verfahrens ist in Figur 4 gezeigt.

Das dort dargestellte System umfaßt eine Vermittlungsstation 1, welche über erste Leitungen 21 bis 24 erhaltene Datenpakete (ATM-Zellen) entsprechend dem jeweiligen Bestimmungsort über zweite Leitungen 41 bis 44 ausgibt und umgekehrt.

Die Leitungen 21 bis 24 sind Glasfaserkabel, die durch Abschlußeinheiten 31 bis 34 abgeschlossen sind. Die Abschlußeinheiten 31 bis 34 sind die praktische Realisierung der sogenannten PHYs (physical ports).

Die Leitungen 41 bis 44, welche ebenfalls als Glasfaserkabel ausgebildet sind, sind durch Abschlußeinheiten 51 bis 54 abgeschlossen. Die Abschlußeinheiten 51 bis 54 sind wie die Abschlußeinheiten 31 bis 34 die praktische Realisierung der sogenannten PHYs (physical ports) .

Die Vermittlungsstation 1 enthält eine (in der Figur 4 links dargestellte) erste ATM-Einheit 11, eine (in der Figur 4 rechts dargestellte) zweite ATM-Einheit 13 und ein dazwischen angeordnetes Koppelnetzwerk 12.

Die Abschlußeinheiten 31 bis 34 sind mit der ersten ATM-Einheit 11, und die Abschlußeinheiten 51 bis 54 mit der zweiten ATM-Einheit 13 verbunden.

Die in der Vermittlungsstation 1, genauer gesagt die in deren ATM-Einheiten ankommenden ATM-Zellen, weisen einen Zellenkopf auf, in welchem unter anderem in einem 28 Bit umfassenden Adreßfeld der Bestimmungsort bzw. der Empfänger der jeweiligen ATM-Zelle festgelegt ist.

Die 28-Bit-Adresse weist zwei Bestandteile auf, nämlich einen 16 Bit umfassenden VCI-Teil und einen 12 Bit umfassenden VPI-Teil. VCI steht für virtual channel identifier und bezeichnet den Verbindungsendpunkt, an welchen die in der betreffenden ATM-Zelle enthaltenen Nutzdaten vermittelt werden sollen. VPI steht für virtual path identifier und bezeichnet eine eine Vielzahl von Verbindungsendpunkten umfassende Teilnehmeranlage, zu welcher die in der betreffenden ATM-Zelle enthaltenen Nutzdaten vermittelt werden sollen.

Die ATM-Einheiten 11 und 13 enthalten einen (in der Figur 4 nicht gezeigten) Verbindungsstatusinformations-Speicher, in welchem für jede Verbindung, genauer gesagt für jede sogenannte VPC (virtual path connection) und für jede sogenannte VCC (virtual channel connection), die über die Vermittlungsstation 1 hergestellt wird, bestimmte Daten (Verbindungsstatusinformationen) gespeichert werden. Die zu speichernden Daten umfassen pro Verbindung ungefähr 200 Byte, sind also relativ umfangreich.

Die zur Spezifizierung des Empfängers einer jeweiligen ATM-Zelle reservierten 28 Bit im Kopfbereich einer jeden ATM-Zelle erlauben es, $2^{28}$ verschiedene Verbindungen herzustellen. Würde man für jede dieser enormen Anzahl von möglichen Verbindungen einen Speicherbereich reservieren, der groß genug ist, um darin die vorstehend bereits erwähnten Verbindungsstatusinformationen speichern zu können, so erforderte dies das Vorsehen eines Speichers mit einer gewaltigen Speicherkapazität.

Ein Speicher mit einer derart hohen Speicherkapazität ist nur mit allergrößtem technischen Aufwand praktisch realisierbar und würde, da in der Praxis jeweils nur ein äußerst geringer Bruchteil der theoretisch möglichen Anzahl von Verbindungen gleichzeitig aufgebaut ist bzw. aufgebaut sein kann, jeweils nur zu einem außerordentlich geringen Bruchteil genutzt werden.

Man zieht es deshalb vor, einen Speicher zu verwenden, dessen Speicherkapazität "nur" an der maximalen Anzahl der gleichzeitig herstellbaren Verbindungen orientiert ist. In diesem Fall kann der Speicher jedoch nicht mehr unmittelbar durch die 28-Bit-Adresse im Kopfbereich der ATM-Zellen adressiert werden. Es bedarf vielmehr einer Adreßumsetzung bzw. einer besonderen Adreßzuweisung. Genauer gesagt bedarf es der Anwendung eines gattungsgemässen Verfahrens; die verschiedenen Parameter sind im betrachteten Beispiel VPI, VCI und gegebenenfalls zusätzlich PN (physical port number), welches die Nummer der Abschlußeinheit bzw. der Leitung ist, über welche die betreffende ATM-Zelle empfangen wurde. Die den jeweiligen Werte-Sätzen zuzuweisende Adresse wird im folgenden als LCI (logical channel identifier) bezeichnet.

Es ist bekannt, sich bei der Durchführung derartiger Zuweisungen eines (Hilfs-)Speichers zu bedienen', welcher derart mit Werten vorbelegt ist, daß die einem jeweiligen Werte-Satz (VPI, VCI, PN) zuzuweisende Adresse (LCI) entweder

-   die Adresse desjenigen Speicherbereiches ist, dessen Inhalt dem Werte-Satz entspricht, oder

-   der Inhalt desjenigen Speicherbereiches ist, der unter Verwendung des Werte-Satzes als Adresse ansprechbar ist.

Der erstgenannte Fall ist unter Verwendung eines sogenannten CAM (content addressable memory) als (Hilfs-)Speicher praktisch realisierbar. Bei CAMs ist für jeden Speicherbereich ein Vergleicher vorgesehen, durch welchen an den Speicher angelegte Daten (Werte-Sätze) jeweils mit dem im betreffenden Speicherbereich gespeicherten Inhalt vergleichbar sind. Dieser Vergleich wird durch die den jeweiligen Speicherbereichen zugeordneten Vergleicher für alle Speicherbereiche gleichzeitig durchgeführt und erfolgt daher sehr schnell. Als Ergebnis erhält man die Adresse der Reihe, in welcher die dem Werte-Satz entsprechenden Daten gespeichert sind; diese Reihenadresse ist zugleich die dem Werte-Satz zuzuordnende Adresse LCI. Eine derartige praktische Realisierung der Adreßzuweisung gestaltet sich auf Grund der großen Anzahl von Vergleichern, die vorgesehen und jeweils gleichzeitig betrieben werden müssen, erkennbar als relativ aufwendig.

Der zweitgenannte Fall ist durch einen "normalen" (Hilfs-) Speicher realisierbar, der vorzugsweise hierarchisch in mehrere Speichereinheiten untergliedert ist. Ein derartiges System ist in Figur 5 veranschaulicht. Es enthält eine erste Speichereinheit 14, eine zweite Speichereinheit 15 und eine dritte Speichereinheit 16. Die erste Speichereinheit 14 wird durch die physical port number PN adressiert, die zweite Speichereinheit 15 wird basierend auf dem virtual path identifier VPI, genauer gesagt durch eine aus der ersten Speichereinheit 14 erhaltene Basisadresse $P_{VPI}$ + VPI adressiert, und die dritte Speichereinheit 16 wird basierend auf dem virtual channel identifier VCI, genauer gesagt durch eine aus der zweiten Speichereinheit 15 erhaltene Basisadresse $P_{VCI}$ + VCI adressiert. Die Daten, die unter den jeweilige Adressen der einzelnen Speichereinheiten gespeichert sind, sind entweder unmittelbar die (mit LCI bezeichneten) Adressen,' die den betreffenden Werte-Sätzen zuzuweisen sind, oder mit P bezeichnete Pointer, die auf den Beginn eines zugeordneten Speicherbereiches der jeweils nachgeordneten Speichereinheit verweisen. Eine derartige praktische Realisierung der Adreßzuweisung gestaltet sich unter anderem aufgrund der Tatsache, daß die in Echtzeit zu ermittelnden und zuzuweisenden LCI Werte durch ein von Haus aus langsames mehrstufiges Verfahren gewonnen werden, ebenfalls als relativ aufwendig.

Ein solches mehrstufiges Verfahren zur Ermittlung einer in der Anzahl der Bits reduzierten Adresse ist aus US 5,481,687 bekannt.

Ferner ist aus US 5,557,609 bekannt, aus der 28-Bit-Adresse im Kopfbereich eine ATM-Zelle durch bitweises Schieben den VPI- und VCI-Teil zu extrahieren. Durch anschließende Verkürzung des VPI- und VCI-Werts wird eine in der Anzahl der Bits reduzierte Adresse zur Adressierung eines Speichers, der Umwandlungsdaten enthält, erzeugt.

Die vorstehend beschriebenen Verfahren erfordern jedoch nicht nur eine aufwendige, d.h. schnelle und/oder umfangreiche Hardware, sondern sind auch - beispielsweise bei Erweiterungen und/oder Veränderungen der Konfiguration des Systems - aufgrund der dann erforderlichen (Hilfs-)Speichererweiterung(en) und/oder Veränderung der Speicherinhalte nur mit relativ großem Aufwand an die veränderten Gegebenheiten anpaßbar.

Der vorliegenden Erfindung liegt daher die Aufgabe zugrunde, das Verfahren gemäß dem Oberbegriff des Patentanspruchs 1 derart weiterzubilden, daß die angestrebte Adreßzuweisung stets einfach und unter minimalem Aufwand realisierbar ist.

Diese Aufgabe wird erfindungsgemäß durch die im kennzeichnenden Teil des Patentanspruchs 1 beanspruchten Merkmale gelöst.

Die einem jeweiligen Satz von Werten zuzuweisende Adresse wird also nicht mehr wie bisher unter Verwendung einer durch einen (Hilfs-)Speicher oder dergleichen realisierbaren Zuordnungstabelle gewonnen, sondern durch ein an die jeweiligen Gegebenheiten angepaßtes Aneinanderreihen von die Werte des jeweiligen Werte-Satzes repräsentierenden Adreßkomponenten.

Die wenigen Umstände (Konfigurationsparameter), von denen die Generierung der zuzuweisenden Adresse abhängt und die wenigen und geringfügigen Auswirkungen derselben auf die Adreßbildung (Veränderung der Länge und der Reihenfolge der aneinandergereihten Adreßkomponenten) sind in zweifacher Hinsicht vorteilhaft: Einerseits kann die zur Durchführung des Verfahrens bereitzustellende Hardware wenig aufwendig und einfach strukturiert sein, und andererseits bedarf es zur Anpassung des Verfahrens an veränderte Umstände lediglich der Modifizierung weniger, die jeweiligen Umstände repräsentierender Parameter.

Es wurde also ein Verfahren gefunden, durch welches die angestrebte Adreßzuweisung stets einfach und unter minimalem Aufwand realisierbar ist.

Vorteilhafte Weiterbildungen sind Gegenstand der Unteransprüche.

Die Erfindung wird nachfolgend anhand eines Ausführungsbeispiels unter Bezugnahme auf die Zeichnung näher erläutert.

Es zeigen

Figur 1     eine Darstellung zur Erläuterung der Bildung der einem Satz von Werten zuzuweisenden Adresse,

Figur 2     eine Darstellung zur Erläuterung der Bildung der einem anderen Satz von Werten zuzuweisenden Adresse,

Figur 3     eine Vorrichtung zur Durchführung des erfindungsgemäßen Verfahrens,

Figur 4     ein System, in welchem herkömmliche Adreßzuweisungsverfahren und das erfindungsgemäße Adreßzuweisungsverfahren einsetzbar sind, und

Figur 5    eine Darstellung zur Erläuterung eines herkömmlichen Adreßzuweisungsverfahrens.

Das Ausführungsbeispiel, anhand dessen das erfindungsgemäße Verfahren nachfolgend im einzelnen erläutert wird, betrifft die in einer ATM-Vermittlungsstation durchzuführende Adreßumsetzung.

Allerdings ist das erfindungsgemäße Verfahren nicht nur in der ATM-Vermittlungstechnik einsetzbar, sondern ganz allgemein überall dort, wo beliebigen Sätzen von beliebige Parameter repräsentierenden Werten Adressen zuzuweisen sind, unter welchen sich auf die jeweiligen Werte-Sätze beziehende Daten speicherbar sind. Als besonders vorteilhaft erweist sich der Einsatz des erfindungsgemäßen Verfahrens in Fällen, wo die Kapazität eines zur Datenspeicherung vorgesehenen Speichers nicht ausreicht, um direkt über den Satz von Werten adressiert werden zu können.

Die Grundzüge des ATM-Vermittlungsverfahrens wurden eingangs bereits ausführlich unter Bezugnahme auf die Figur 4 beschrieben. Der grundsätzliche Aufbau des in der Figur 4 gezeigten Systems wird durch den Einsatz des erfindungsgemäßen Verfahrens nicht verändert; die hierzu bereits gemachten Ausführungen behalten daher, sofern nicht ausdrücklich etwas Gegenteiliges zum Ausdruck gebracht wird, in vollem Umfang ihre Gültigkeit.

Die erste ATM-Einheit 11 der Vermittlungsstation 1 erhält über die Leitungen 21 bis 24 und die Abschlußeinheiten 31 bis 34 Datenpakete in Form von ATM-Zellen, die es über das Koppelnetzwerk 12, die zweite ATM-Einheit 13 und die Abschlußeinheiten 51 bis 54 auf die Leitungen 41 bis 44 zu vermitteln gilt. Umgekehrt erhält die zweite ATM-Einheit 13 der Vermittlungsstation 1 über die Leitungen 41 bis 44 und die Abschlußeinheiten 51 bis 54 Datenpakete in Form von ATM-Zellen, die es über das Koppelnetzwerk 12, die erste ATM-Einheit 11 und die Abschlußeinheiten 31 bis 34 auf die Leitungen 21 bis 24 zu vermitteln gilt.

Der Bestimmungsort der jeweiligen ATM-Zellen ist in deren Kopfbereich in Form einer 28 Bit umfassenden Adresse festgelegt. Durch diese 28-Bit-Adresse sind $2^{28}$ Bestimmungsorte festlegbar. Die Anzahl der möglichen Bestimmungsorte ist jedoch nicht zugleich auch die Anzahl der Verbindungen, die über eine Vermittlungsstation hergestellt (aufrecht erhalten) werden können und für die dort entsprechende Verbindungsstatusinformationen zu speichern sind. Die maximale Anzahl der Verbindungen, die gleichzeitig hergestellt werden kann, wird in dem in der Figur 4 gezeigten Beispiel zu 16 K angenommen.

Dieser Wert ergibt sich aus einer offiziell verlautbarten Empfehlung, wonach über eine Leitung, über welche wie bei den in der Figur 4 gezeigten Glasfaserkabeln 21 bis 24 bzw. 41 bis 44 eine Datenmenge von 150 MBit pro Sekunde übertragen werden kann, maximal 4 K Verbindungen realisiert werden sollten, wobei es keine Rolle spielt, ob es sich bei den Verbindungen um die zuvor bereits erwähnten, sogenannten VPCs (virtual path connections) oder um die ebenfalls zuvor bereits erwähnten, sogenannten VCCs (virtual channel connections) handelt.

Der zur Speicherung von 16K Verbindungen betreffenden Verbindungsstatusinformationen bereitzustellende Speicher ist ganz offensichtlich nicht direkt über die im Kopfbereich der ATM-Zellen enthaltenen 28-Bit-Adresse adressierbar. Dies gilt erst recht für den Fall, daß die Adresse, unter der die eine bestimmte Verbindung betreffenden Daten zu speichern sind, zusätzlich davon abhängig gemacht werden soll, über welche der Leitungen bzw. Abschlußeinheiten die zu vermittelnde ATM-Zelle empfangen wurde.

Die Adresse, die zur Adressierung des Verbindungsstatusinformations-Speichers generiert wird, ist der eingangs bereits erwähnte LCI(logical channel identifier)-Wert. Um 16K verschiedene Adressen repräsentieren zu können, muß der LCI-Wert 14 Bit umfassen.

Im vorliegend betrachteten Beispiel umfaßt der als reduzierte Adresse verwendete LCI-Wert genau die soeben erwähnten 14 Bit, wobei deren Inhalt von dem (12 Bit umfassenden) VPI-Wert, dem (16 Bit umfassenen) VCI-Wert und dem (vorliegend) 6 Bit umfassenden PN-Wert abhängt. Der Vollständigkeit halber sei an dieser Stelle nochmals darauf hingewiesen, daß der VPI(virtual path identifier)-Wert und der VCI(virtual channel identifier)-Wert gemeinsam die 28-Bit-Adresse im Kopf der ATM-Zellen bilden und daß der PN (physical port number)-Wert die Nummer der Leitung bzw. Abschlußeinheit repräsentiert, von welcher die betreffende ATM-Zelle empfangen wurde.

Der besagte LCI-Wert ergibt sich aus einer Aneinanderreihung von drei Adreßkomponenten, von welchen die erste Adreßkomponente auf dem PN-Wert basiert, die zweite Adreßkomponente auf dem VCI-Wert basiert, und die dritte Adreßkomponente auf dem VPI-Wert basiert.

Die Größe und die Reihenfolge der Anordnung der insgesamt 14 Bit umfassenden Adreßkomponenten hängt unter anderem davon ab, ob der VPI-Wert der jeweiligen ATM-Zelle kleiner als ein wert $2^V$ ist oder nicht. $2^V$ ist die Nummer derjenigen VPC (virtual path connection), die als erste der durch die VPIs von 0 an durchnumerierten VPCs in der Vermittlungsstation nicht aufgelöst, d.h. als solche weitervermittelt wird. V ist ein erster Konfigurationsparameter, der sich aus der (durch den Benutzer einstellbaren) Konfiguration des Systems ergibt und zur Durchführung der beschriebenen Adreßzuweisung bekannt sein muß.

Zum besseren Verständnis ist es wichtig zu wissen, welche Arten von Verbindungen (connections) es gibt und wie diese durch die Vermittlungsstation handzuhaben sind. Die über eine ATM-Vermittlungsstation herstellbaren Verbindungen lassen sich, wie vorstehend bereits mehrfach angedeutet, in zwei Klassen einteilen, nämlich die sogenannten VCCs (virtual channel connections) und die sogenannten VPCs (virtual path connections). Die VCCs sind zu jeweils ganz bestimmten Teilnehmeranschlüssen individuell hergestellte Einzelverbindungen; die VPCs sind Sammelverbindungen (beispielsweise zwischen Vermittlungsstationen oder zu mehrere Teilnehmeranschlüsse umfassenden Teilnehmeranlagen), unter welchen jeweils ein ganzes Bündel von einheitlich handhabbaren VCCs zusammenfaßbar ist. VPCs können, damit die darunter zusammengefaßten VCCs individuell weitervermittelt werden können (getrennte Wege gehen können) in einer Vermittlungsstation aufgelöst werden; dadurch kann aus einer VPC eine Vielzahl von VCCs entstehen. VPCs können jedoch auch als solche, d.h. nicht aufgelöst weitervermittelt werden.

Durch eine entsprechende Konfigurierung des Systems wird vor dessen Inbetriebnahme festgelegt, wie viele der theoretisch möglichen $2^{12}$ VPCs in der betreffenden Vermittlungsstation aufzulösen sind und welche VPCs dies im einzelnen sind. Den VPCs sind durch die VPIs Nummern zugeordnet, wobei diejenigen VPCs, die in der betreffenden Vermittlungsstation aufzulösen sind, VPIs von 0 bis $2^V-1$ zugeordnet sind, und wobei die VPCs, die in der Vermittlungsstation nicht aufgelöst werden, durch die Nummern gekennzeichnet sind, welche größer als $2^V - 1$ sind.

Die Art und Weise der Generierung des jeweiligen LCI-Wertes hängt also unter anderem davon ab, ob die betreffende VPC in der Vermittlungsstation aufgelöst oder als solche beibehalten wird. Dies läßt sich, wie vorstehend bereits erwähnt wurde, dadurch feststellen, daß überprüft wird, ob

$$a) \qquad VPI < 2^V$$

oder

$$b) \qquad VPI \geq 2^V$$

gilt.

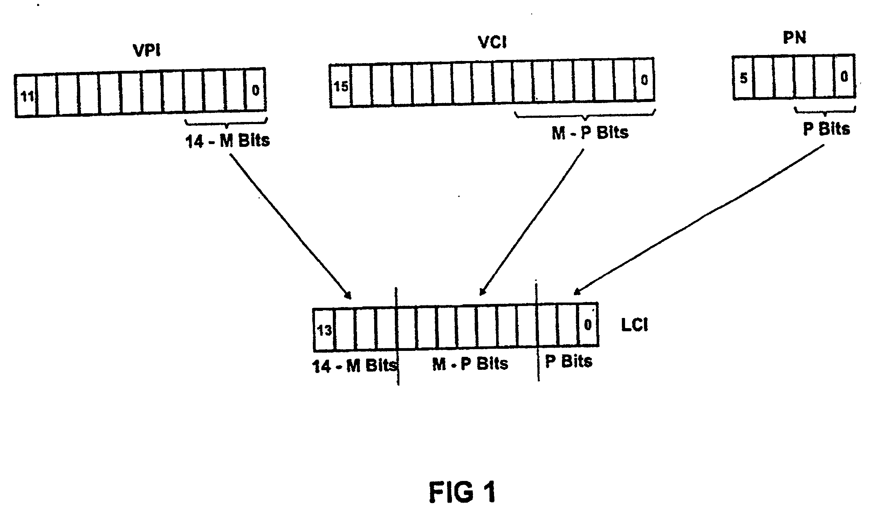

Die Vorgehensweise im Fall a), d.h. für den Fall, daß die betreffende VPC in der Vermittlungsstation aufgelöst wird, ist in Figur 1 veranschaulicht. Die Figur 1 zeigt schematisch einen 12 Bits (Bits 0 bis 11) umfassenden VPI-Wert, einen 16 Bits (Bits 0 bis 15) umfassenden VCI-Wert, und einen 6 Bits (Bits 0 bis 5) umfassenden PN-Wert sowie einen 14 Bits (Bits 0 bis 13) umfassenden LCI-Wert. Der LCI-Wert setzt sich wie folgt aus Teilen des VPI-Wertes, des VCI-Wertes und des PN-Wertes zusammen:

1) Die niederwertigen P Bits des LCI-Wertes sind die niederwertigsten P Bits des PN-Wertes.

2) Die höchstwertigten 14-M Bits des LCI-Wertes sind die niederwertigsten 14-M Bits des VPI-Wertes.

3) Die dazwischeliegenden M-P Bits des LCI-Wertes sind die niederwertigsten M-P Bits des VCI-Wertes.

Der genannte Wert P ist ein zweiter Konfigurationsparameter, der die Anzahl der Leitungen bzw. Abschlußeinheiten (PHYs), mit denen die betreffende ATM-Einheit verbunden ist, repräsentiert. Im betrachteten Beispiel ist $2^P$ gleich der Anzahl der mit der betreffenden ATM-Einheit verbundenen Leitungen bzw. Abschlußeinheiten. Der für P festzusetzende Wert ergibt sich aus der (durch den Benutzer bestimmbaren) Konfiguration des Systems und muß im betrachteten Beispiel zur Durchführung der beschriebenen Adreßzuweisung bekannt sein.

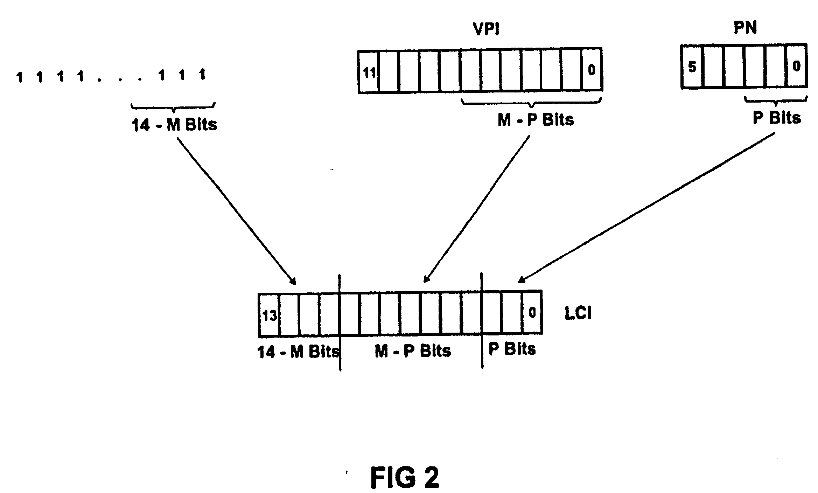

Die Kürzung des ursprünglich 6 Bits umfassenden PN-Wertes auf P Bits (P ist in den in den Figuren 1 und 2 veranschaulichten Beispielen gleich 3) bedeutet keinen Informationsverlust, da die im LCI-Wert weggelassenen (höchstwertigen) Bits des PN-Wertes bei der jeweiligen Konfiguration erkennbar ohnehin gleich 0 wären.

Der zuvor genannte Wert M ist ein dritter Konfigurationsparameter, der die Anzahl der Blöcke, in welche der durch die LCI-Werte zu adressierende Verbindungsstatusinformations-Speicher unterteilt ist, repräsentiert. Im betrachteten Beispiel ist $2^M$ gleich der Anzahl der besagten Blöcke des Verbindungsstatusinformations-Speichers. Die Anzahl der Blöcke, in welche der Verbindungsstatusinformations-Speicher einzuteilen ist, ergibt sich aus der Anzahl der VPCs, die in der Vermittlungsstation nicht aufzulösen, sondern als solche weiterzuvermitteln sind. Sämtliche sich auf diese VPCs beziehenden Verbindungsstatusinformationen (und nur diese) müssen aus Gründen, auf die noch näher eingegangen werden wird, im obersten der Blöcke des Verbindungsstatusinformations-Speichers Platz finden. Der für M festzusetzende Wert ergibt sich aus der (durch den Benutzer bestimmbaren) Konfiguration des Systems und muß im betrachteten Beispiel zur Durchführung des erfindungsgemäßen Verfahrens bekannt sein.

Die Kürzung des ursprünglich 12 Bits umfassenden VPI-Wertes auf 14-M Bits (14-M ist in den in den Figuren 1 und 2 veranschaulichten Beispielen gleich 4) bedeutet keinen Informationsverlust, da die im LCI-Wert weggelassenen (höchstwertigen) Bits des VPI-Wertes bei der jeweiligen Konfiguration erkennbar ohnehin stets gleich 0 wären.

Auch die Kürzung des ursprünglich 16 Bits umfassenden VCI-Wertes auf M-P Bits (M-P ist in den in den Figuren 1 und 2 veranschaulichten Beispielen gleich 7 )bedeutet keinen Informationsverlust, da die im LCI-Wert weggelassenen (höchstwertigen) Bits des VCI-Wertes bei der jeweiligen Konfiguration erkennbar ohnehin stets gleich 0 wären.

Daß durch die Aneinanderreihung der die VPI, VCI- und PN-Werte repräsentierenden Adreßkomponenten kein Informationsverlust eintreten kann, ist auch daran ersichtlich, daß die 14 Bits des auf die beschriebene Art und Weise zusammengesetzten LCI-Werte genau ausreichen, um die zur Speicherung der Verbindungsstatusinformationen maximal benötigten 16K Adressen darstellen zu können.

Die Zusammensetzung der LCI-Werte im Fall b), d.h. für den Fall, daß die betreffende VPC in der Vermittlungsstation nicht aufgelöst wird, ist in Figur 2 veranschaulicht. Die Figur 2 zeigt ähnlich wie die Figur 1 schematisch einen 12 Bits (Bits 0 bis 11) umfassenden VPI-Wert, einen 6 Bits (Bits 0 bis 5) umfassenden PN-Wert sowie einen 14 Bits (Bits 0 bis 13) umfassenden LCI-Wert. Der LCI-Wert setzt sich wie folgt aus Teilen des VPI-Wertes, des VCI-Wertes und des PN-Wertes zusammen:

    1) Die niederwertigten P Bits des LCI-Wertes sind die niederwertigsten P Bits des PN-Wertes.

    2) Die höchstwertigten 14-M Bits des LCI-Wertes sind mit Einsen belegt.

    3) Die dazwischeliegenden M-P Bits des LCI-Wertes sind die niederwertigsten M-P Bits des VPI-Wertes.

P und M sind die vorstehend bereits ausführlich erläuterten (zweiten und dritten) Konfigurationsparameter.

Die für die Fälle a) und b) generierten LCI-Werte unterscheiden sich hinsichtlich der höchstwertigen 14-M Bits und der darunter liegenden M-P Bits.

Die höchstwertigen 14-M Bits dienen zur Auswahl eines der Blöcke, in die der Verbindungsstatusinformations-Speicher unterteilt ist.

Im Fall b), welcher die VPCs betrifft, die in der Vermittlungsstation nicht aufgelöst werden, wird die Blockadresse fest auf 1...1, also den maximal möglichen Wert gesetzt. Dadurch wird der oberste der Blöcke des Verbindungsstatusinformations-Speichers angesprochen. Dies ist auch erwünscht, denn die sich auf die nicht aufzulösenden VPCs beziehenden Verbindungsstatusinformationen sind, wie vorstehend bereits erwähnt wurde, genau dort und nur dort abzulegen. Weil im obersten der Blöcke des Verbindungsstatusinformations-Speichers nur solche Verbindungsstatusinformationen zu speichern sind, die in der Vermittlungsstation nicht aufzulösende VPCs betreffen, sind diese nur über die im Mittelteil des LCI-Wertes gespeicherten VPI-Werte anzusprechen; VCI-Werte werden mangels Auflösung der VPCs nicht benötigt und bleiben im Fall b) konsequenter Weise unberücksichtigt.

Im Fall a), welcher die VPCs betrifft, die in der Vermittlungsstation aufzulösen sind, ist die durch die höchstwertigen 14-M Bits repräsentierte Blockadresse gleich dem jeweiligen VPI-Wert, welcher im Fall a) nie den obersten der Blöcke des Verbindungsstatusinformations-Speichers repräsentieren kann. Dies ist auch erwünscht, denn die sich auf die aufzulösenden VPCs beziehenden Verbindungsstatusinformationen sind in den unteren Blöcken, genauer gesagt in allen Blöcken außer dem obersten Block abzulegen. Weil in allen außer im obersten der Blöcke des Verbindungsstatusinformations-Speichers nur solche Verbindungsstatusinformationen zu speichern sind, die in der Vermittlungsstation aufzulösende VPCs betreffen, sind diese zusätzlich über die im Mittelteil des LCI-Wertes gespeicherten VCI-Werte anzusprechen, wobei die den VCI-Wert repräsentierende Adreßkomponente aufgrund der Vielzahl der unter einer VPC zusammenfaßbaren VCCs die größte der Adreßkomponenten ist, aus denen der LCI-Wert zusammengesetzt wird.

Wie vorstehend bereits erwähnt wurde, beinhalten die bei der Bildung des LCI-Wertes weggelassenen (höchstwertigen) Bits der VPI-, VCI- und PN-Werte jeweils nur Nullen, so daß kein Informationsverlust auftritt. Um sicherzustellen, daß die auch tatsächlich der Fall ist, kann vorgesehen werden, dies jeweils zu überprüfen. Stellt sich bei einer derartige Überprüfung heraus, daß eines oder mehrere der wegzulassenden Bits der einzelnen Werte ungleich Null ist, so deutet dies auf einen Fehler hin, der einer besonderen Behandlung bedarf. Die besondere Behandlung kann beispielsweise darin bestehen, daß die betroffene ATM-Zelle nicht vermittelt wird. Dadurch kann zumindest verhindert werden, daß bereits bestehende Verbindungen gestört werden.

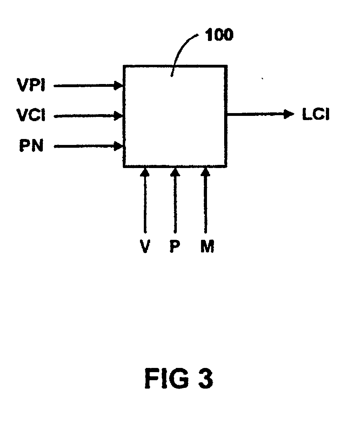

Abschließend wird unter Bezugnahme auf Figur 3 eine Vorrichtung zur Durchführung des erfindungsgemäßen Verfahrens erläutert.

Das zuvor beschriebene Verfahren wird in einer in der Figur 3 gezeigten Adreßzuweisungseinheit 100 durchgeführt. In diese Adreßzuweisungseinheit 100 werden als Eingangssignale der Satz von Werten, dem der zu erzeugende LCI-Wert zuzuweisen ist, und eine Reihe von Konfigurationsparametern eingegeben.

Der besagte Satz von Werten umfaßt den 12 Bits langen VPI-Wert (aus dem Kopfbereich der ATM-Zelle), den 16 Bits langen VCI-Wert (ebenfalls aus dem Kopfbereich der ATM-Zelle) und den 6 Bits langen PN-Wert.

Die besagten Konfigurationsparameter umfassen die zuvor bereits erläuterten ersten, zweiten und dritten Konfigurationsparameter, genauer gesagt einen 4 Bits umfassenden V-Wert, einen 3 Bits umfassenden P-Wert und einen 4 Bits umfassenden M-Wert.

Dem Satz von VPI-, VCI- und PN-Werten wird unter Berücksichtigung der Konfigurationsparameter eine Adresse zugewiesen, unter welcher in einem Verbindungsstatusinformations-Speicher sich auf den Werte-Satz beziehende Daten (Verbindungsstatusinformationen) speicherbar sind. Die Art und Weise der Bildung dieser Adresse erfolgt wie vorstehend unter Bezugnahme auf die Figuren 1 und 2 ausführlich beschrieben wurde.

Die besagte Adresse wird als ein 14 Bits umfassender LCI-Wert aus der Adreßzuweisungseinheit 100 ausgegeben.

Die in die Adreßzuweisungseinheit 100 eingegebenen Konfigurationsparameter V, P und M sind "nur" Repräsentanten der eigentlichen Konfigurationsparameter $2^V$, $2^P$ und $2^M$. Die Eingabe der Konfigurationsparameter in Form von Exponenten zur Basis 2 ermöglicht es einerseits, die für die Eingabe der Konfigurationsparameter in die Adreßzuweisungseinheit vorzusehenden Anschlüsse an derselben gering zu halten, und andererseits, die so eingegebenen Werte unmittelbar, d.h. ohne zusätzliche Vorverarbeitung weiterzuverarbeiten zu können. Nichtsdestotrotz kann natürlich auch vorgesehen werden, die Konfigurationsparameter vollständig, d.h. nicht wie vorgeschlagen als Exponenten einzugeben. Im übrigen besteht auch keine Einschränkung darauf, die Konfigurationsparameter in Form von Exponenten zur Basis 2 einzugeben; der Basiswert kann vielmehr auch ein beliebiger anderer Wert sein.

Es besteht auch keine Einschränkung darauf, daß durch die einzelnen Konfigurationsparameter genau die Größen repräsentiert werden, die in der vorangehenden Beschreibung angegeben wurden. Es sind zumindest teilweise mehr oder weniger gleichwertige Alternativen denkbar. So kann beispielsweise durch den ersten Konfigurationsparameter V die Größe anstelle der Anzahl der jeweiligen Blöcke des Verbindungsstatusinformations-Speichers repräsentiert werden.

Zusammenfassend kann festgestellt werden, daß mit dem erfindungsgemäßen Verfahren ein Verfahren gefunden wurde, durch welches die angestrebte Adreßzuweisung stets einfach und unter minimalem Aufwand realisierbar ist.

**Patentansprüche**

1. Verfahren, durch welches Wertesätzen (VPI, VCI, PN), die jeweils verschiedene Parameter repräsentieren, Adressen (LCI) zugewiesen werden, unter welchen Daten speicherbar sind, die sich auf die jeweiligen Wertesätze (VPI, VCI, PN) beziehen, **dadurch gekennzeichnet, daß** die zuzuweisenden Adressen (LCI) aus Adreßkomponenten (14-M Bits, M-P Bits, P Bits) bestehen, die durch Aneinanderreihung einzelner Werte (14-M Bits, M-P Bits, P Bits) eines Wertesatzes (VPI, VCI, PN) gebildet werden, wobei der Umfang der jeweiligen Adreßkomponenten und/oder die Reihenfolge der jeweiligen Adreßkomponenten bei deren Aneinanderreihung in Abhängigkeit von Konfigurationsparametern, die die Wertebereiche der Parameter beeinflussen, individuell variierbar sind.

2. Verfahren nach Anspruch 1, **dadurch gekennzeichnet,** **daß** das Verfahren in einer ATM-Einheit eines B-ISDN-Systems einsetzbar ist, um einen Verbindungsstatusinformations-Speicher adressieren zu können.

3. Verfahren nach Anspruch 2, **dadurch gekennzeichnet,** **daß** die Werte des Werte-Satzes einen VPI-Wert, einen VCI-Wert und einen PN-Wert umfassen, wobei der VPI-Wert und der VCI-Wert den Bestimmungsort einer ATM-Zelle bezeichnen und wobei der PN-Wert deren Herkunftsort bezeichnet.

4. Verfahren nach Anspruch 2 oder 3, **dadurch gekennzeichnet,** **daß** ein erster der Konfigurationsparameter danach ausgewählt ist, daß anhand dessen bestimmbar ist, ob eine VPC in der betreffenden Vermittlungsstation aufzulösen ist oder nicht.

5. Verfahren nach einem der Ansprüche 2 bis 4, **dadurch gekennzeichnet,** **daß** ein zweiter der Konfigurationsparameter danach ausgewählt ist, daß anhand dessen der maximale Wertebereich des PN-Wertes bestimmbar ist.

6. Verfahren nach einem der Ansprüche 2 bis 5, **dadurch gekennzeichnet,** **daß** ein dritter der Konfigurationsparameter danach ausgewählt ist, daß anhand dessen der maximale Wertebereich des VPI-Wertes bestimmbar ist.

7. Verfahren nach einem der vorhergehenden Ansprüche, **dadurch gekennzeichnet,** **daß** die Konfigurationsparameter in Form von Exponenten zu einer vorbestimmten Basis bereitgestellt werden.

8. Verfahren nach einem der Ansprüche 2 bis 7, **dadurch gekennzeichnet,** **daß** die Adreßkomponenten den Werten eines jeweiligen Satzes entsprechen, wobei jedoch für die Adreßbildung bedeutungslose Teile ersatzlos gestrichen und/oder durch andere ersetzt werden.

**Claims**

1. Method by means of which sets of values (VPI, VCI, PN) which each represent different parameters are assigned to addresses (LCI) at which it is possible to store data which relates to the respective sets of values (VPI, VCI, PN), **characterized in that** the addresses (LCI) to be assigned comprise address components (14-M bits, M-P bits, P bits) which are formed by arranging in a row individual values (14-M bits, M-P bits, P bits) in a set of values (VPI, VCI, PN), in which case the number of respective address components and/or the sequence of the respective address components can be varied individually when they are arranged in a row, as a function of configuration parameters which influence the value ranges of the parameters.

2. Method according to Claim 1, **characterized**
   **in that** the method can be used in an ATM unit of a B-ISDN system in order to make it possible to address a connection status information memory.

3. Method according to Claim 2, **characterized**
   **in that** the values in the value set comprise a VPI value, a VCI value and a PN value, with the VPI value and the VCI value denoting the destination of an ATM cell, and with the PN value denoting its source location.

4. Method according to Claim 2 or 3, **characterized**
   **in that** a first of the configuration parameters is then selected and in that, on the basis of this, it is possible to determine whether a VPC is or is not to be separated in the relevant switching station.

5. Method according to one of Claims 2 to 4, **characterized**
   **in that** a second of the configuration parameters is then selected, and in that, on the basis of this, it is possible to determine the maximum value range of the PN value.

6. Method according to one of Claims 2 to 5, **characterized**
   **in that** a third of the configuration parameters is then selected, and in that, on the basis of this, the maximum value range of the VPI value can be determined.

7. Method according to one of the preceding claims, **characterized**
   **in that** the configuration parameters are provided in the form of exponents to a predetermined base.

8. Method according to one of Claims 2 to 7, **characterized**
   **in that** the address components correspond to the values of in each case one set, but with parts which are meaningless for address formation being deleted without any replacement, and/or being replaced by others.

**Revendications**

1. Procédé affectant à des ensembles de valeurs (VPI, VCI, PN), qui représentent chacun différents paramètres, des adresses (LCI) auxquelles peuvent être mémorisées des données qui se rapportent aux ensembles de valeurs respectifs (VPI, VCI, PN),
   **caractérisé en ce que** les adresses à affecter (LCI) sont constituées de composants d'adresses (14-M bits, M-P bits, P bits) qui sont formés par le rangement en série de valeurs individuelles (14-M bits, M-P bits, P bits) d'un ensemble de valeurs (VPI, VCI, PN), l'étendue des composants d'adresses respectifs et/ou l'ordre des composants d'adresses respectifs lors de leur rangement en série étant variables individuellement en fonction de paramètres de configuration qui influencent les domaines de valeurs des paramètres.

2. Procédé selon la revendication 1, **caractérisé en ce que** le procédé est utilisable dans une unité ATM d'un système B-ISDN pour pouvoir adresser une mémoire d'informations d'état de liaison.

3. Procédé selon la revendication 2, **caractérisé en ce que** les valeurs de l'ensemble de valeurs comprennent une valeur VPI, une valeur VCI et une valeur PN, la valeur VPI et la valeur VCI désignant le lieu de destination d'une cellule ATM et la valeur PN désignant son lieu de provenance.

4. Procédé selon la revendication 2 ou 3, **caractérisé en ce qu'**un premier paramètre des paramètres de configuration est sélectionné selon qu'on peut déterminer à partir de celui-ci si un VPC est à décomposer ou non dans la station de commutation concernée.

5. Procédé selon l'une des revendications 2 à 4, **caractérisé en ce qu'**un deuxième paramètre des paramètres de configuration est sélectionné selon qu'on peut déterminer à partir de celui-ci le domaine de valeurs maximal de la valeur PN.

6. Procédé selon l'une des revendications 2 à 5, **caractérisé en ce qu'**un troisième paramètre des paramètres de configuration est sélectionné selon qu'on peut déterminer à partir de celui-ci le domaine de valeurs maximal de la valeur VPI.

7. Procédé selon l'une des revendications précédentes, **caractérisé en ce que** les paramètres de configuration sont mis à disposition sous forme d'exposants d'une base prédéterminée.

8. Procédé selon l'une des revendications 2 à 7, **caractérisé en ce que** les composants d'adresses correspondent aux valeurs d'un ensemble respectif, des parties sans importance pour la formation d'adresse étant toutefois barrées sans être remplacées et/ou étant remplacées par d'autres.

EP 0 927 476 B1

VPI

VCI

PN

11 | | | | | | | | | | | 0

15 | | | | | | | | | | | | | | | 0

5 | | | | 0

14 - M Bits

M - P Bits

P Bits

13 | | | | | | | | | | | | | 0   LCI

14 - M Bits | M - P Bits | P Bits

**FIG 1**

FIG 2

**FIG 3**

**FIG 4**

**FIG 5**